# DEMANDE DE BREVET EUROPEEN

(11) **EP 1 481 876 A1**
(43) Date de publication de la demande: **01.12.2004**
(21) Numéro de dépôt: 04300171.8
(22) Date de dépôt: 31.03.2004
(51) Int. Cl.: B62D 6/00, B62D 5/04

(54) **Procédé de commande d'une direction assistée électrique pour véhicule automobile**

(30) Priorité: 01.04.2003 FR 0304020
(71) Demandeur: Renault s.a.s., 92100 Boulogne Billancourt (FR)
(72) Inventeur: Bion, Sébastien, 35000 Rennes (FR); Coffin, Florent, 27490 Ecardenville/Eure (FR); Fauqueux, Olivier, 78600 Mesnil le Roi (FR)

(57) **Abrégé**

L'invention concerne un procédé de commande d'une direction assistée électrique pour véhicule automobile, équipé notamment d'un moteur d'assistance électrique exerçant un couple assistant le couple exercé directement par le conducteur sur le volant, dans le but d'orienter les roues directrices du véhicule, procédé comportant une phase de reconnaissance au cours de laquelle est détecté en temps réel le profll de mission routière du véhicule en circulation grâce à des moyens recevant en entrée des informations sur le fonctionnement du véhicule, caractérisé en ce qu'il comporte de plus :
- une phase d'apprentissage, précédant ladite phase de reconnaissance, au cours de laquelle sont générées des lois d'assistance adaptées à différents profils de mission routière selon des prestations attendues par le conducteur, qui définissent des valeurs de couple d'assistance en fonction de chaque profil de mission routière,
- une phase de détermination du couple d'assistance de la direction électrique, suivant ladite phase de reconnaissance, couple qui est adapté au profil de mission détecté par pondération de chacune des différentes valeurs du couple d'assistance adaptées aux différents profils de mission routière.

## Description

L'invention concerne un procédé de commande d'une direction assistée électrique pour véhicule automobile, réalisant plus particulièrement une adaptation de l'assistance au profil instantané de mission routière du véhicule. Elle concerne également un dispositif de mise en oeuvre de ce procédé.

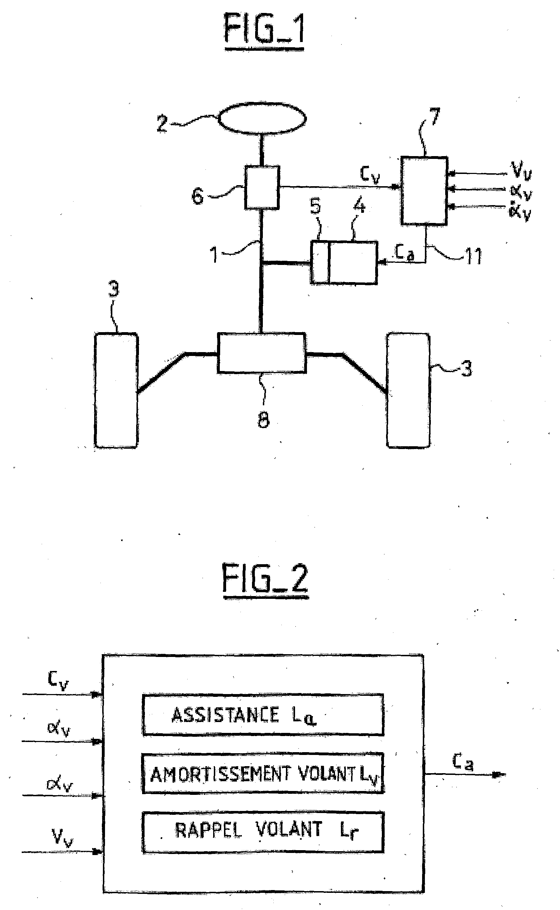

De façon classique, comme le montre la représentation schématique de la figure 1, une direction assistée électrique est constituée d'une colonne de direction 1 reliant le volant 2 aux roues 3 du véhicule, et dont la rotation est facilitée par un moteur 4 pilotant un réducteur 5. Un capteur 6 de couple délivre la mesure du couple Cᵥ existant dans le volant et la colonne à un calculateur électronique 7 de commande. Ce calculateur 7 génère une commande d'assistance Cₐ sous forme de couple pour les directions assistées sur colonne ou pignon, destinée à braquer les roues du véhicule par l'intermédiaire d'un système pignon-crémaillère 8 reliant le volant 2 aux roues 3.

En plus du couple volant Cᵥ, le calculateur reçoit en entrée deux autres informations :
- la vitesse Vᵥ du véhicule, en fonction de laquelle va varier le niveau d'assistance, information qui est mesurée par un capteur de vitesse situé dans le véhicule ;
- l'angle volant αᵥ, qui sert à la fonction de rappel volant actif;
- la vitesse volant α̇, qui sert à la fonction d'amortissement volant.

Ainsi, actuellement, l'assistance varie en fonction du seul paramètre de vitesse véhicule et le niveau d'effort au volant résulte d'un compromis entre la tenue de route et le confort de conduite. Selon certaines configurations de roulage, ce compromis n'est pas optimal. En manoeuvre de parking notamment, il n'est pas nécessaire d'avoir un retour d'informations précis par le volant, par contre il est intéressant d'augmenter l'assistance pour faciliter le plus possible le braquage des roues. De même, en cas de roulage en montagne ou sur une route de plaine, il n'est pas intéressant d'avoir le même effort en virage à vitesse égale.

Le document US-4762194 décrit une assistance qui décroît quand l'accélération longitudinale positive du véhicule est supérieure à un seuil donné, pour garder une bonne sensation de suivi de trajectoire à grande vitesse. Et le document US-4651840 décrit un procédé d'assistance qui l'augmente jusqu'à une première vitesse limite et la diminue jusqu'à une deuxième vitesse limite du véhicule, dans le but d'apporter plus de confort de conduite au conducteur.

Dans US-5566072, le système proposé contrôle le fonctionnement d'un moteur thermique de véhicule automobile à partir de l'estimation des conditions de trafic routier. Le procédé consiste à calculer un rapport de temps de trajet basé sur la vitesse détectée du véhicule. Dans ce système, des roues arrières directrices sont commandées par le pilotage de leur position. Il ne s'agit pas de diminuer l'effort des roues remonté jusqu'au volant pour augmenter le confort du conducteur.

Dans le document US-4602695, le dispositif présenté comprend des moyens de détermination des conditions de circulation et des moyens générant un signal de correction d'une référence mémorisée caractéristique du couple d'assistance à la direction, Ce signal de correction est destiné à obtenir un contrôle optimal du débit d'assistance de la direction assistée hydraulique, mais aucune précision n'est donnée sur l'effet de la direction.

Dans le document US-4773010, le système proposé détecte les conditions de circulation pour choisir sur quel type de route circule le véhicule. C'est une méthode de détection par statistiques consistant en une détection des conditions de roulage à partir des capteurs de la direction assistée électrique mais cette méthode ne fournit aucune adaptation de l'assistance au profil routier.

Dans le document EP-0262469, un dispositif de contrôle de la force de la direction produite par un système de direction assistée hydraulique dans un véhicule est décrit. Le dispositif est assisté par une valve à solénoïde, ledit solénoïde étant contrôlé à partir d'un jeu de courbes caractéristiques stockées dans une mémoire. Un des inconvénients d'un tel système est qu'il faut programmer ladite mémoire.

Dans le document US-5485892, le système présenté comprend plusieurs programmes de contrôle de la conduite selon des situations de conduites prédéfinies, parmi lesquels un programme est choisi selon la situation de roulage. Il s'agit de cartographies de contrôle de la conduite en fonction des conditions routières, en recherchant des cibles pour les éviter.

Dans le document US-6208981, il est proposé un système de commande automatique de conduite d'un véhicule automobile qui nécessite une distinction de cinq classes de situations de conduite.

Dans tous les documents précédents, seule la reconnaissance du profil routier est décrite. Il reste toujours la nécessité de chercher les moyens d'adaptation du couple d'assistance à la direction assistée au profil de mission routière du véhicule.

Un objet de la présente invention est de fournir un système de commande d'une direction assistée électrique amélioré et en particulier une adaptation améliorée du couple d'assistance à la direction assistée au profil de mission routière d'un véhicule.

En outre, les solutions antérieures qui proposent des stratégies faisant varier le couple d'assistance en fonction de la vitesse véhicule ou sur des seuils d'accélération, ne tiennent pas compte du profil de mission routière du véhicule, c'est-à-dire du mode de roulage sur un type de route donné. En effet, pour une même vitesse du véhicule, le niveau d'effort acceptable au volant varie suivant le type de route emprunté par le véhicule. Si le conducteur circule sur une route de montagne très sinueuse, avec des virages serrés, son profil de roulage est différent d'une circulation sur une autoroute en ligne droite.

Le but de l'invention est de pallier ces inconvénients en proposant une adaptation en temps réel de l'assistance électrique de direction en fonction du profil de mission du véhicule, soit du type de route et/ou de la configuration de roulage du véhicule. Cette adaptation prend en compte la dynamique du véhicule qui permet de définir le type de route « équivalent » plutôt que la route elle-même telle qu'elle pourrait être définie par un système GPS par exemple.

Pour cela, un premier objet de l'invention est un procédé de commande d'une direction assistée électrique pour véhicule automobile, équipé notamment d'un moteur d'assistance électrique exerçant un couple assistant le couple exercé directement par le conducteur sur le volant, dans le but d'orienter les roues directrices du véhicule, procédé comportant une phase de reconnaissance au cours de laquelle est détecté en temps réel le profil de mission routière du véhicule en circulation grâce à des moyens recevant en entrée des informations sur le fonctionnement du véhicule, caractérisé en ce qu'il comporte de plus :
- une phase d'apprentissage, précédant ladite phase de reconnaissance, au cours de laquelle sont générées des lois d'assistance adaptées à différents profils de mission routière selon des prestations attendues par le conducteur, qui définissent des valeurs de couple d'assistance en fonction de chaque profil de mission routière,
- une phase de détermination du couple d'assistance de la direction électrique, suivant ladite phase de reconnaissance, couple qui est adapté au profil de mission détecté par pondération de chacune des différentes valeurs du couple d'assistance adaptées aux différents profils de mission routière.

Un des avantages de la présente invention est qu'elle fournit une adaptation originale en temps réel de l'assistance électrique de la direction en fonction de la route et/ou de la configuration de roulage du véhicule.

De préférence, le procédé de commande d'une direction assistée électrique selon l'invention présente encore les caractéristiques suivantes :
- la première phase d'apprentissage consiste à générer des lois d'assistance globales, soit notamment les lois d'assistance principale (Lₐ) définie à partir du couple volant (Cᵥ), d'amortissement du volant (Lᵥ) définie à partir de l'angle du volant (αᵥ), et de rappel de volant actif (L) définie à partir de la vitesse du volant (α̇) , adaptées à différents profils de mission routière selon différentes prestations attendues par le conducteur du véhicule et caractéristiques de chaque profil de mission, qui déterminent les valeurs du couple d'assistance (Cₐ) de la direction selon les différents profils de mission routière,
- les profils de mission routière retenus sont définis par le mode de roulage du véhicule sur un type de route donné et sont choisis parmi les suivants :
   - manoeuvre,
   - ville,
   - montagne,
   - route droite,
   - route sinueuse,
   - autoroute ;
   - les différentes prestations attendues par le conducteur du véhicule et caractéristiques de chaque profil de mission routière sont qualifiées d'une ou plusieurs des façons suivantes :
      - p₁) l'effort ressenti par le conducteur au niveau du volant,
      - p₂) la précision de direction ou effort de direction en virage,
      - p₃) le maintien en ligne droite ou clavetage de direction,
      - p₄) le rappel de direction, ou, vitesse de retour volant sur un lâché de main, l'effort ressenti au niveau du volant regroupant les notions de couple volant à l'arrêt et à petite vitesse et l'effort de direction en virage ;
   - les adaptations de la loi d'assistance globale de la direction aux différents profils de mission routière sont établies à partir d'une loi de référence pour le profil de route en ligne droite, qui inclut déjà l'adaptation en fonction de la vitesse du véhicule ;
   - pour un profil de mission routière qualifiant une autoroute, la loi de référence à partir de laquelle est établie l'adaptation de la loi d'assistance est modifiée dans le sens d'une augmentation de l'effort ressenti au volant pour donner la loi (L_{DE2+}), d'une augmentation de la précision de direction (L_{DP2-}) et d'une augmentation du clavetage (L_{DC2+}), mais elle est modifiée dans le sens d'une diminution du rappel de direction pour donner la loi (L_{DH_});
   - pour un profil de mission routière qualifiant une route de montagne, la loi de référence à partir de laquelle est établie l'adaptation de la loi d'assistance est modifiée pour donner les lois suivantes, dans le sens d'une diminution de l'effort ressenti (L_{DE_}), de la précision de direction (L_{DP_}) et du maintien en ligne droite (L_{DC_}), mais est modifiée dans le sens d'une augmentation du rappel de direction (L_{DR+}), pour obtenir plus de rappel en sortie de virage ;
   - pour un profil de mission routière qualifiant un roulage en ville, la loi de référence à partir de laquelle est établie l'adaptation de la loi d'assistance est modifiée pour donner les lois suivantes, dans le sens d'une diminution de l'effort ressenti au volant (L_{DE2_}) et du clavetage (L_{DC2_}), et d'une diminution de la précision de direction (L_{DP}), mais par contre elle est modifiée dans le sens d'une augmentation du rappel de direction pour donner la loi (L_{DR+}) ;
   - pour un profil de mission routière qualifiant une route sinueuse, la loi de référence à partir de laquelle est établie l'adaptation de la loi d'assistance est modifiée pour donner les lois suivantes, dans le sens d'une diminution du clavetage de la direction (L_{DC}), mais reste valable pour l'effort ressenti (L_{DE}), la précision de direction (L_{DP}) et le rappel de direction (L_{DR}) ;
   - pour un profil de mission routière qualifiant des manoeuvres à vitesse très réduite, la loi de référence à partir de laquelle est établie l'adaptation de la loi d'assistance est modifiée de façon à diminuer l'effort ressenti par le conducteur au niveau du volant (L_{DE+}), et de façon par contre à un peu augmenter le rappel de direction (L_{DR-}) :
      - les lois d'assistance adaptées à différents profils de mission routière selon des prestations attendues par le conducteur font l'objet de cartographies préétablies et mémorisées dans le calculateur de la direction assistée électrique, qui définissent des valeurs de couple d'assistance en fonction du profil de mission routière ;
      - la détection du profil de mission routière défini à la fois par le type de route et par la configuration de roulage du véhicule est réalisée à partir d'informations sur la vitesse du véhicule, l'angle d'ouverture du papillon d'admission d'air ou la position de la pédale d'accélérateur, le régime du moteur et les rapports de la boîte de vitesses ou la position de la pédale de frein ;
      - la détection du profil de mission routière est réalisée de plus à partir d'informations accélérométriques, longitudinale, latérale et verticale, du véhicule, ou de l'angle du volant ; et
      - lors de la détection du profil de mission routière. Il utilise un capteur embarqué sur le véhicule ou un système GPS -Global Positioning System- pour détecter une route de montagne ou des virages.

La présente invention s'applique en outre à un dispositif de mise en oeuvre du procédé de commande d'une direction assistée électrique, ledit dispositif étant doté d'une direction assistée électrique, équipé notamment d'un moteur d'assistance électrique configuré pour exercer un couple assistant un couple exercé directement par un conducteur sur le volant, dans le but d'orienter les roues directrices dudit véhicule, ledit dispositif comportant un moyen de reconnaissance pour détecter en temps réel le profil de mission routière du véhicule en circulation grâce à des moyens recevant en entrée des informations sur le fonctionnement du véhicule, caractérisé en ce que ledit dispositif comporte en plus :
- un moyen d'apprentissage destiné à générer des lois d'assistance adaptées à différents profils de mission routière selon des prestations attendues par le conducteur, qui définissent des valeurs de couple d'assistance en fonction de chaque profil de mission routière, et
- un moyen de détermination du couple d'assistance de la direction électrique, ledit couple étant adapté au profil de mission détecté par pondération de chacune des différentes valeurs du couple d'assistance adaptées aux différents profils de mission routière.

Selon une autre caractéristique du dispositif selon l'invention, il comporte un calculateur électronique (7) de commande recevant en entrée la mesure du couple (Cᵥ) existant dans le volant (2) et la colonne de direction (1), réalisée par un capteur (6) de couple, et générant une commande d'assistance (Cₐ) destinée à braquer les roues (3) du véhicule par l'intermédiaire d'un système pignon-crémaillère (8) reliant le volant (2) aux roues.

La présente invention concerne en outre un article de commerce comportant une mémoire lisible par un ordinateur, un programme exécutable par un ordinateur étant enregistré sur ladite mémoire pour la commande d'une direction assistée électrique pour véhicule automobile, équipé notamment d'un moteur d'assistance électrique exerçant un couple assistant le couple exercé directement par le conducteur sur le volant, dans le but d'orienter les roues directrices du véhicule, le programme comportant un codage pour une phase de reconnaissance au cours de laquelle est détecté en temps réel le profil de mission routière du véhicule en circulation grâce à des moyens recevant en entrée des informations sur le fonctionnement du véhicule, caractérisé en ce que le programme comporte de plus un codage pour :
- une phase d'apprentissage au cours de laquelle sont générées des lois d'assistance adaptées à différents profils de mission routière selon des prestations attendues par le conducteur, qui définissent des valeurs de couple d'assistance en fonction de chaque profil de mission routière,
- une phase de détermination du couple d'assistance de la direction électrique, ledit couple étant adapté au profil de mission détecté par pondération de chacune des différentes valeurs du couple d'assistance adaptées aux différents profils de mission routière.

La présente invention s'applique enfin à un véhicule automobile pour la mise en oeuvre du procédé, ledit véhicule automobile étant doté d'une direction assistée électrique, équipé notamment d'un moteur d'assistance électrique configuré pour exercer un couple assistant un couple exercé directement par un conducteur sur le volant, dans le but d'orienter les roues directrices dudit véhicule, ledit véhicule automobile comportant un moyen de reconnaissance pour détecter en temps réel le profil de mission routière du véhicule en circulation grâce à des moyens recevant en entrée des informations sur le fonctionnement du véhicule, caractérisé en ce que ledit véhicule automobile comporte en plus :
- un moyen d'apprentissage destiné à générer des lois d'assistance adaptées à différents profils de mission routière selon des prestations attendues par le conducteur, qui définissent des valeurs de couple d'assistance en fonction de chaque profil de mission routière, et
- un moyen de détermination du couple d'assistance de la direction électrique, ledit couple étant adapté au profil de mission détecté par pondération de chacune des différentes valeurs du couple d'assistance adaptées aux différents profils de mission routière.

D'autres caractéristiques et avantages de l'invention apparaîtront à la lecture de la description illustrée par les figures suivantes qui sont, outre la figure 1 déjà décrite représentant schématiquement une direction assistée électrique de véhicule automobile :
- la figure 2: un organigramme de fonctionnement d'un calculateur de commande d'une direction assistée électrique ;
- la figure 3 : un faisceau de lois d'assistance de la direction en fonction de la vitesse du véhicule ;
- la figure 4 : un tableau des lois d'assistance de la direction selon différents profils de mission routière du véhicule ;
- la figure 5 : un organigramme de fonctionnement d'un calculateur de commande d'une direction assistée électrique selon l'invention ;
- les figures 6ₐ à 6ₑ : cinq courbes de paramétrage du couple volant selon différents profils de mission routière selon l'invention.

Comme cela a été rappelé précédemment, le calculateur électronique de commande de la direction assistée génère un couple d'assistance Cₐ selon d'une part une loi d'assistance principale Lₐ définie à partir du couple volant Cᵥ, des lois d'amortissement du volant L, définies à partir de la vitesse du volant α̇ᵥ, et d'autre part une loi L, de rappel de volant actif définie à partir de l'angle du volant αᵥ, toutes ces lois dépendant également de la vitesse du véhicule V_{v.} La figure 2 est un organigramme de fonctionnement d'un calculateur de commande de direction assistée.

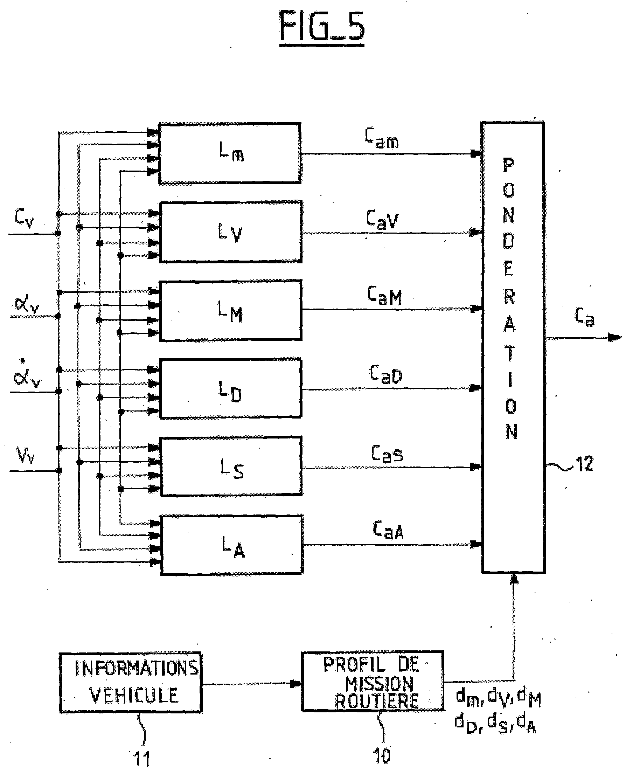

Pour une direction à assistance variable évoluée, la variation du couple d'assistance Cₐ en fonction du couple conducteur C_{c} varie en fonction de la vitesse du véhicule Vᵥ par une commutation automatique de lois discrètes dont un exemple est représenté sur la figure 3. Ce faisceau de courbes peut être plus ou moins dense suivant le nombre de pas de vitesse véhicule défini. Dans le cas de cette figure, le faisceau est défini pour quinze valeurs de la vitesse du véhicule entre 0 et 118 km/h.

Entre deux courbes, les lois sont interpolées de façon linéaire par le calculateur de commande, afin que la variation du couple d'assistance Cₐ demandé soit presque continue. Lorsque la vitesse est supérieure à la vitesse maximale du faisceau, la loi est extrapolée.

Selon une caractéristique de l'invention, l'assistance d'une direction électrique est déterminée de plus en fonction du profil de mission routière du véhicule assisté, détecté par ledit calculateur en temps réel. Cette détection est réalisée par exemple à partir d'informations sur la vitesse du véhicule, l'angle d'ouverture du papillon d'admission d'air ou la position de la pédale d'accélérateur, le régime du moteur et les rapports de la boîte de vitesses, la position de la pédale de frein, auxquelles on peut ajouter des informations accélérométriques, longitudinale, latérale et verticale, du véhicule, ou l'angle du volant. Pour détecter une route de montagne ou des virages, il est également possible d'utiliser un capteur embarqué sur le véhicule ou un système GPS -Global Positioning System-. Le profil de mission routière est défini à la fois par le type de route et par la configuration de roulage du véhicule.

Les profils de mission routière retenus sont par exemple les suivants :
- manoeuvre,
- ville,
- montagne,
- route droite,
- route sinueuse,
- autoroute.

Selon l'invention, le procédé de commande comporte une première phase d'apprentissage au cours de laquelle sont générées des lois d'assistance Lₘ, L_{V}, L_{M}, L_{D}, L_{S} et L_{A}, par rapport aux six profils de mission routière précédemment définis, Pour cela, il adapte les lois d'assistance principale Lₐ, d'amortissement Lᵥ et de rappel Lᵣ définies précédemment pour déterminer le couple d'assistance Cₐ de la direction, aux différents profils de mission routière, selon les différentes prestations attendues par le conducteur du véhicule et caractéristiques de chaque profil de mission.

Ces prestations choisies sont qualifiées de la façon suivante:
- p₁) l'effort ressenti par le conducteur au niveau du volant,
- p₂) la précision de direction ou effort de direction en virage,
- p₃) le maintien en ligne droite ou clavetage de direction,
- p₄) le rappel de direction, ou vitesse de retour volant sur un lâché de main.

L'effort ressenti au niveau du volant regroupe les notions de couple volant à l'arrêt et à petite vitesse et l'effort de direction en virage.

Les adaptations de la loi d'assistance globale de la direction sont établies à partir d'une loi de référence considérée comme optimale pour le profil de route en ligne droite, qui inclut déjà l'adaptation en fonction de la vitesse du véhicule. Cette loi est référencée L_{DE} pour la prestation p₁, L_{DP} pour la prestation p₂, L_{DC} pour la prestation p₃ et L_{DR} pour la prestation p₄. Comme le montre le tableau de la figure 4, pour une route sinueuse, cette loi de référence L_{DE}, L_{DP} et L_{DR} reste valable pour les prestations référencées p₁, p₂ et p₄ mais est modifiée dans le sens d'une diminution du clavetage de la direction pour devenir la loi L_{DC}.

Pour une autoroute, la loi de référence est modifiée pour donner les lois suivantes, dans le sens d'une augmentation relativement importante de l'effort ressenti au volant L_{DE2+}, de la précision de direction L_{DP2+} et du clavetage L_{DRR+}, mais par contre elle est modifiée dans le sens d'une diminution du rappel de direction pour donner la loi L_{DR}.

Pour une route de montagne, la loi de référence est modifiéé pour donner les lois suivantes, dans le sens d'une diminution de l 'effort ressenti L_{DE} , de la précision de direction L_{DP_} et du maintien en ligne droite L_{DC_}, mais est modifiée dans le sens d'une augmentation du rappel de direction L_{DR+}, car en montagne, on souhaite plus de rappel en sortie de virage.

Pour un roulage en ville, à vitesse relativement réduite inférieure à 50 km/h, la loi de référence est modifiée dans le sens d'une diminution assez importante de l'effort au volant L_{DE2_}, comme du clavetage de direction L_{DC2_}, mais moins importante de la précision de direction L_{DP_}, par contre elle est modifiée dans le sens d'une augmentation importante du rappel de direction L_{DR+}. En ville, il faut un minimum de précision dans la direction, car le roulage en ville demande plus de précision de trajectoire qu'en manoeuvre par exemple, donc plus d'effort au volant. Par contre, le clavetage et cet effort au volant en virage doivent être réduits par rapport à la loi de référence.

Enfin, pour des manoeuvres à vitesse très réduite, pour garer la véhicule par exemple, la loi est modifiée de façon à diminuer considérablement l'effort ressenti par le conducteur au niveau du volant L_{DE4_}, et de façon par contre à un peu augmenter le rappel de direction L_{DR+} . Concernant la précision de direction et du clavetage, ces prestations n'ont pas de sens en manoeuvre. Il faut peu d'effort de butée à butée, donc le couple volant à l'arrêt doit être fortement réduit, entre 10 et 50% en fonction de la stratégie du constructeur qui souhaite réaliser un véhicule plus ou moins sportif. Le couple au volant doit être fortement réduit et le rappel de direction doit être un peu réduit par rapport à la loi de référence sur route droite.

Ces lois d'assistance Lₘ, L_{V}, L_{M}, L_{D}, L_{S} et L_{A} font l'objet de cartographies préétablies et mémorisées dans le calculateur de la direction assistée électrique, qui définissent des valeurs de couple d'assistance Cₐₘ, C_{aV}, C_{aM}, C_{aD}, C_{aS} et C_{aA} en fonction du profil de mission routière.

Dans chaque cas, les adaptations apportées par le procédé selon l'invention doivent satisfaire les trois règles de sécurité suivantes :
- garantir un retour d'information minimal au volant dans tous les cas,
- garanti un niveau minimal de maniabilité du volant acceptable par le conducteur, afin de ne jamais entraver l'action du conducteur sur la direction,
- assurer une transition progressive entre les différentes configurations afin de ne pas surprendre le conducteur.

Le procédé réalisé par le calculateur électronique de commande comporte une deuxième phase de reconnaissance au cours de laquelle est détecté en temps réel le profil de mission routière du véhicule assisté, par des moyens 10 recevant en entrée des informations 11 sur le fonctionnement du véhicule, tels que décrits précédemment. Ces moyens de détection délivrent en sortie le degré d'appartenance du véhicule à chaque profil de mission préétabli, ce degré dₘ, d_{V}, d_{M}, d_{D}, d_{S}, et d_{A} étant une valeur comprise entre 0 et 1. Puis, le calculateur élabore, lors d'une troisième phase, le couple d'assistance Cₐ, de la direction électrique adapté au profil de mission routière détecté, par pondération 12 de chacune des différentes valeurs du couple d'assistance adaptées aux différents profils de mission routière, comme le montre l'organigramme de fonctionnement de la figure 5.

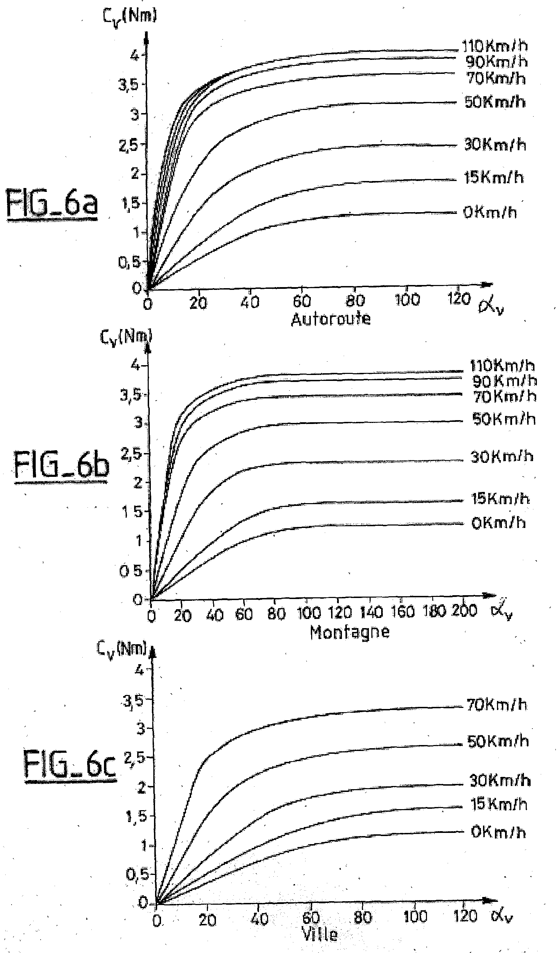

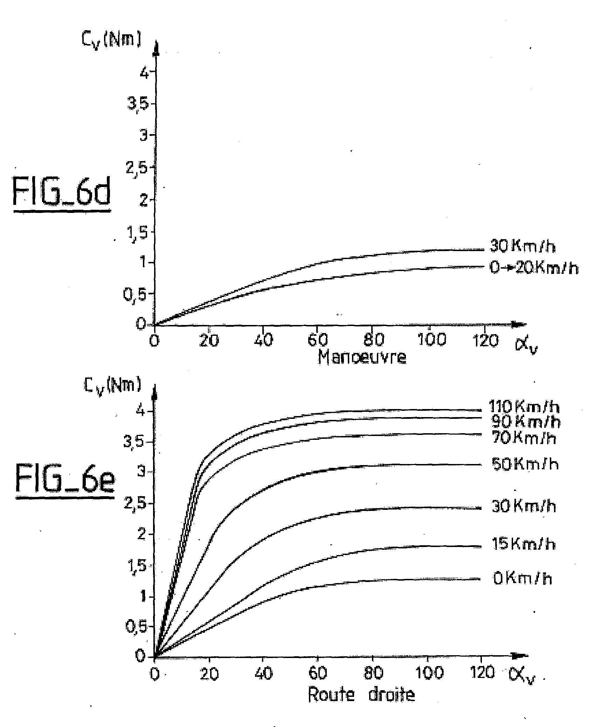

Les figures 6ₐ à 6ₑ sont des courbes de mesure du couple volant Cᵥ en fonction de l'angle volant αᵥ, pour différentes valeurs de la vitesse du véhicule allant de 0 km/h à 90 km/h, établies selon chacun des six profils de mission routière décrits, soit sur autoroute, en montagne, en ville, en manoeuvre et en route droite, Dans le cas d'une route sinueuse, on applique un gain de 1.1 sur les abscisses, de la figure 6_{b}, tout en maintenant les ordonnées.

Un second objet de l'invention est un dispositif de mise en oeuvre du procédé de commande d'une direction assistée électrique pour véhicule automobile, comportant un calculateur électronique 7 de commande recevant en entrée la mesure du couple Cᵥ existant dans le volant 2 et la colonne de direction 1, réalisée par un capteur 6 de couple, et générant une commande d'assistance Cₐ destinée à braquer les roues du véhicule par l'intermédiaire d'un système pignon crémaillère 6 reliant le volant 2 aux roues 3.

Le procédé de l'invention peut être programmé sur un article de commerce comportant une mémoire lisible par un ordinateur, par exemple un CD, DVD ou équivalent ou sur le disque dur d'un ordinateur. Un tel programme pour le procédé sera exécutable par un ordinateur, et sera enregistré sur ladite mémoire pour être exécuté par ledit ordinateur.

## Revendications

1. Procédé de commande d'une direction assistée électrique pour véhicule automobile, équipé notamment d'un moteur d'assistance éléctrique exerçant un couple assistant le couple exercé directement par le conducteur sur le volant, dans le but d'orienter les roues directrices du véhicule, procédé comportant une phase de reconnaissance au cours de laquelle est détecté en temps réel le profil de mission routière du véhicule en circulation grâce à des moyens recevant en entrée des informations sur le fonctionnement du véhicule, **caractérisé en ce qu'**il comporte de plus:
- une phase d'apprentissage, précédant ladite phase de reconnaissance, au cours de laquelle sont générées des lois d'assistance adaptées à différents profils de mission routière selon des prestations attendues par le conducteur, qui définissent des valeurs de couple d'assistante en fonction de chaque profil de mission routière,
- une phase de détermination du couple d'assistance de la direction électrique, suivant ladite phase de reconnaissance, couple qui est adapté au profil de mission détecté par pondération de chacune des différentes valeurs du couple d'assistance adaptées aux différents profils de mission routière.

2. Procédé de commande d'une direction assistée électrique selon la revendication 1, **caractérisé en ce que** la première phase d'apprentissage consiste à générer des lois d'assistance globales, soit notamment les lois d'assistance principale (Lₐ) définie à partir du couple volant (Cᵥ), d'amortissement du volant (Lᵥ) définie à partir de l'angle du volant (αᵥ), et de rappel de volant actif (Lᵣ) définie à partir de la vitesse du volant (α̇), adaptées à différents profils de mission routière selon différentes prestations attendues par le conducteur du véhicule et caractéristiques de chaque profil de mission, qui déterminent les valeurs du couple d'assistance (Cₐ) de la direction selon les différents profils de mission routière.

3. Procédé de commande d'une direction assistée électrique selon la revendication 2, **caractérisé en ce que** les profils de mission routière retenus sont définis par le mode de roulage du véhicule sur un type de route donné et sont choisis parmi les suivants :
- manoeuvre,
- ville,
- montagne,
- route droite,
- route sinueuse,
- autoroute.

4. Procédé de commande d'une direction assistée électrique selon l'une des revendications 2 ou 3, **caractérisé en ce que** les différentes prestations attendues par le conducteur du véhicule et caractéristiques de chaque profil de mission routière sont qualifiées d'une ou plusieurs des façons suivantes :
- p₁) l'effort ressenti par le conducteur au niveau du volant,
- p₂) la précision de direction ou effort de direction en virage,
- p₃) le maintien en ligne droite ou clavetage de direction,
- p₄) le rappel de direction, ou vitesse de retour volant sur un lâché de main, l'effort ressenti au niveau du volant regroupant les notions de couple volant à l'arrêt et à petite vitesse et l'effort de direction en virage.

5. Procédé de commande d'une direction assistée électrique selon la revendication 3, **caractérisé en ce que** les adaptations de la loi d'assistance globale de la direction aux différents profils de mission routière sont établies à partir d'une loi de référence pour le profil de route en ligne droite, qui inclut déjà l'adaptation en fonction de la vitesse du véhicule.

6. Procédé de commande d'une direction assistée électrique selon l'une des revendications 1 à 5, **caractérisé en ce que**, pour un profil de mission routière qualifiant une autoroute, la loi de référence à partir de laquelle est établie l'adaptation de la loi d'assistance est modifiée dans le sens d'une augmentation de l'effort ressenti au volant pour donner la loi (L_{DE2+}), d'une augmentation de la précision de direction (L_{DP2+}) et d'une augmentation du clavetage (L_{DC2+}), mais elle est modifiée dans le sens d'une diminution du rappel de direction pour donner la loi (L_{DR_}).

7. Procédé de commande d'une direction assistée électrique selon l'une des revendications 1 à 5, **caractérisé en ce que** pour un profil de mission routière qualifiant une route de montagne, la loi de référence à partir de laquelle est établie l'adaptation de la loi d'assistance est modifiée pour donner les lois suivantes, dans le sens d'une diminution de l'effort ressenti (L_{DE_}), de la précision de direction (L_{DP_}) et du maintien en ligne droite (L_{DC_}), mais est modifiée dans le sens d'une augmentation du rappel de direction (L_{DR+}), pour obtenir plus de rappel en sortie de virage.

8. Procédé de commande d'une direction assistée électrique selon l'une des revendications 1 à 5, **caractérisé en ce que** pour un profil de mission routière qualifiant un roulage en ville, la loi de référence à partir de laquelle est établie l'adaptation de la loi d'assistance est modifiée pour donner les lois suivantes, dans le sens d'une diminution de l'effort ressenti au volant (L_{DE2} ) et du clavetage (L_{DC2_}), et d'une diminution de la précision de direction (L_{DP_}), mais par contre elle est modifiée dans le sens d'une augmentation du rappel de direction pour donner la loi (L_{DR+}),

9. Procédé de commande d'une direction assistée éléctrique selon l'une des revendications 1 à 5, **caractérisé en ce que** pour un profil de mission routière qualifiant une route sinueuse, la loi de référence à partir de laquelle est établie l'adaptation de la loi d'assistance est modifiée pour donner les lois suivantes, dans le sens d'une diminution du clavetage de la direction (L_{DC_}), mais reste valable pour l'effort ressenti (L_{DE}), la précision de direction (L_{DP}) et le rappel de direction (L_{DR}).

10. Procédé de commande d'une direction assistée électrique selon l'une des revendications 1 à 5, **caractérisé en ce que** pour un profil de mission routière qualifiant des manoeuvres à vitesse très réduite, la loi de référence à partir de laquelle est établie l'adaptation de la loi d'assistance est modifiée de façon à diminuer l'effort ressenti par le conducteur au niveau du volant (L_{DE4} ), et de façon par contre à un peu augmenter le rappel de direction (L_{DR+})

11. Procédé de commande d'une direction assistée électrique selon l'une des revendications 1 à 10, **caractérisé en ce que** les lois d'assistance adaptées à différents profils de mission routière selon des prestations attendues par le conducteur font l'objet de cartographies préétablies et mémorisées dans le calculateur de la direction assistée électrique, qui définissent des valeurs de couple d'assistance en fonction du profil de mission routière.

12. Procédé de commande d'une direction assistée électrique selon l'une des revendications 1 à 5, **caractérisé en ce que** la détection du profil de mission routière défini à la fois par le type de route et par la configuration de roulage du véhicule est réalisée à partir d'informations sur la vitesse du véhicule, l'angle d'ouverture du papillon d'admission d'air ou la position de la pédale d'accélérateur, le régime du moteur et les rapports de la boîte de vitesses ou la position de la pédale de frein.

13. Procédé de commande d'une direction assistée électrique selon la revendication 12, **caractérisé en ce que** la détection du profil de mission routière est réalisée de plus à partir d'informations accélérométriques, longitudinale, latérale et verticale, du véhicule, ou de l'angle du volant.

14. Procédé de commande d'une direction assistée électrique selon la revendication 12, **caractérisé en ce que** lors de la détection du profil de mission routière, il utilise un capteur embarqué sur le véhicule ou un sytème GPS -Global Positioning System- pour détecter une route de montagne ou des virages.

15. Dispositif de mise en oeuvre du procédé de commande d'une direction assistée électrique selon l'une des revendications 1 à 14, ledit dispositif étant doté d'une direction assistée électrique, équipé notamment d'un moteur d'assistance électrique configuré pour exercer un couple assistant un couple exercé directement par un conducteur sur le volant, dans le but d'orienter les roues directrices dudit véhicule, ledit dispositif comportant un moyen de reconnaissance pour détecter en temps réel le profil de mission routière du véhicule en circulation grâce à des moyens recevant en entrée des informations sur le fonctionnement du véhicule, **caractérisé en ce que** ledit dispositif comporte en plus:
- un moyen d'apprentissage destiné à générer des lois d'assistance adaptées à différents profils de mission routière selon des prestations attendues par le conducteur, qui définissent des valeurs de couple d'assistance en fonction de chaque profil de mission routière, et
- un moyen de détermination du couple d'assistance de la direction électrique, ledit couple étant adapté au profil de mission détecté par pondération de chacune des différentes valeurs du couple d'assistance adaptées aux différents profils de mission routière.

16. Dispositif selon la revendication 15, **caractérisé en ce qu'**il comporte un calculateur électronique (7) de commande recevant en entrée la mesure du couple (Cᵥ) existant dans le volant (2) et la colonne de direction (1), réalisée par un capteur (6) de couple, et générant une commande d'assistance (Cₐ) destinée à braquer les roues (3) du véhicule par l'intermédiaire d'un système pignon-crémaillère (8) reliant le volant (2) aux roues.

17. Un article de commerce comportant une mémoire lisible par un ordinateur, un programme exécutable par un ordinateur étant enregistré sur ladite mémoire pour la commande d'une direction assistée électrique pour véhicule automobile, équipé notamment d'un moteur d'assistance électrique exerçant un couple assistant le couple exercé directement par le conducteur sur le volant, dans le but d'orienter les roues directrices du véhicule, le programme comportant un codage pour une phase de reconnaissance au cours de laquelle est détecté en temps réel le profil de mission routière du véhicule en circulation grâce à des moyens recevant en entrée des informations sur le fonctionnement du véhicule, **caractérisé en ce que** le programme comporte de plus un codage pour :
- une phase d'apprentissage au cours de laquelle sont générées des lois d'assistance adaptées à différents profils de mission routière selon des prestations attendues par le conducteur, qui définissent des valeurs de couple d'assistance en fonction de chaque profil de mission routière,
- une phase de détermination du couple d'assistance de la direction électrique, ledit couple étant adapté au profil de mission détecté par pondération de chacune des différentes valeurs du couple d'assistance adaptées aux différents profils de mission routière.

18. Véhicule automobile pour la mise en oeuvre du procédé suivant l'une quelconque des revendications 1 à 17, ledit véhicule automobile étant doté d'une direction assistée électrique, équipé notamment d'un moteur d'assistance électrique configuré pour exercer un couple assistant un couple exercé directement par un conducteur sur le volant, dans le but d'orienter les roues directrices dudit véhicule, ledit véhicule automobile comportant un moyen de reconnaissance pour détecter en temps réel le profil de mission routière du véhicule en circulation grâce à des moyens recevant en entrée des informations sur le fonctionnement du véhicule, **caractérisé en ce que** ledit véhicule automobile comporte en plus:
- un moyen d'apprentissage destiné à générer des lois d'assistance adaptées à différents profils de mission routière selon des prestations attendues par le conducteur, qui définissent des valeurs de couple d'assistance en fonction de chaque profil de mission routière, et
- un moyen de détermination du couple d'assistance de la direction électrique, ledit couple étant adapté au profil de mission détecté par pondération de chacune des différentes valeurs du couple d'assistance adaptées aux différents profils de mission routière.
